Europäisches Patentamt

(19) European Patent Office

Office européen des brevets

(11) EP 0 920 143 A1

(12) **EUROPEAN PATENT APPLICATION**

(43) Date of publication:
02.06.1999 Bulletin 1999/22

(51) Int. Cl.$^6$: **H04B 7/185**, H04Q 7/38,
H04B 7/26

(21) Application number: 97309651.4

(22) Date of filing: 01.12.1997

(84) Designated Contracting States:
AT BE CH DE DK ES FI FR GB GR IE IT LI LU MC
NL PT SE
Designated Extension States:
AL LT LV MK RO SI

(71) Applicant: ICO Services Ltd.
Hammersmith, London W6 9BN (GB)

(72) Inventors:
• Grayson, Mark
Chiswick, London, W4 2QT (GB)

• Chomet, Patrick
West Hampstead, NW2 3SR (GB)
• Mullins, Denis Roy
Sancroft Street, London SE11 5UL (GB)

(74) Representative:
Geary, Stuart Lloyd et al
Venner, Shipley & Co.,
20 Little Britain
London EC1A 7DH (GB)

(54) **Signal characteristics measuring and reporting by a mobile satellite telephone using a stoled burst of a TDMA frame**

(57) In order to use spectrum more efficiently in a TDMA mobile telephone system, signal measurements are carried out by a mobile station (4) outside of the normal frame structure, i.e. idle frames for signal measurement are not provided. When a diversity or a double data rate mode is being used, a communication burst period is stolen to provide time for the measurements. The invention is particularly applicable to satellite mobile telephone systems in which the burst length is less than the signal propagation time.

Fig. 1

## Description

The present invention relates to method of reporting received signal characteristics in a mobile telephone network employing TDMA for communication between a base station and a mobile station.

In mobile telephone systems, it is sometime desirable for a mobile station to report received signal strength and other measurements to a base station. In GSM (Global System for Mobile Communications), the TDMA frame structure provides idle frames during which no speech traffic is carried and the measurements can be made.

This arrangement suffers from the disadvantage of being wasteful of spectrum resources. This is exacerbated in the case of satellite mobile telephone systems.

It is an aim of the present invention to ameliorate the aforementioned problem.

According to the present invention, there is provided a method of reporting received signal characteristics in a mobile telephone network employing TDMA for communication between a base station and a mobile station, the method comprising making measurements at a mobile station and transmitting a report, generated on the basis of said measurements, to a base station, wherein the measurements are performed between transmission and reception of TDMA bursts by the mobile station and the frame structure of the TDMA scheme does not include idle frames.

In the case of a satellite mobile telephone system, the propagation time between a station, directly in communication with the mobile station, and the mobile station is greater than the duration of a burst.

Preferably, such a method will additionally comprise operating said station and the mobile station to exchange two bursts per TDMA frame, wherein said measurements are made by the mobile station instead of transmitting a burst.

Preferably, the mobile station receives two bursts per frame from one or more stations and transmits a burst during a slot complementing the slot of the better of the two received bursts, said measurements being made during the slot complementing the slot of the worse of the two received bursts.

Preferably, the base station transmits a measurement request to the mobile station and the mobile station responds by performing said measurements.

The measurements may include measurements of received signal timing and/or frequency.

According to the present invention, there is also provided a mobile station for a mobile telephone network including a control processor, wherein the control processor is programmed to control the mobile station to perform the mobile station's role in a method according to the present invention.

An embodiment of the present invention will now be described, by way of example, with reference to the accompanying drawings, in which:-

    Figure 1 illustrates a satellite mobile telephone system;
    Figure 2 shows a mobile station;
    Figure 3 illustrates two satellites and two sets of cells of the mobile satellite telephone system of Figure 1;
    Figure 4 illustrates the timing of TDMA bursts in the mobile satellite telephone system of Figure 1;

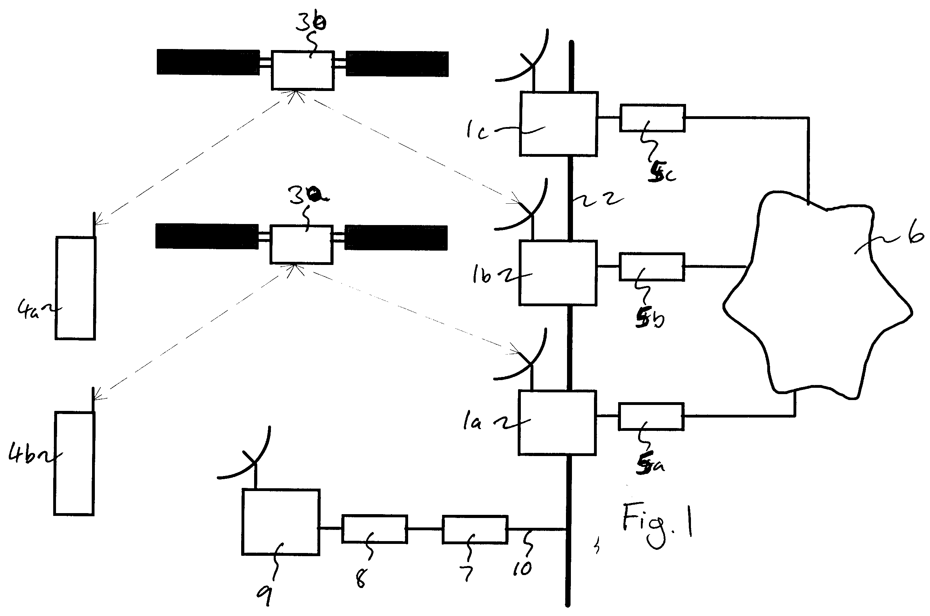

Referring to Figure 1, a satellite mobile telephone system comprises a plurality of satellite access nodes 1a, 1b, 1c interconnected by a high capacity digital network 2 (hereinafter "the backbone network"), a plurality of satellites 3a, 3b, a plurality of a mobile stations 4a, 4b, gateway mobile satellite switching centres 5a, 5b, 5c providing connections between the satellite access nodes 1a, 1b, 1c and other networks 6, a network management centre 7, a satellite control centre 8 and a tracking, telemetry and control station 9. The network management centre 7, the satellite control centre 8 and the tracking, telemetry and control station 9 are interconnected by a lower capacity digital network 10 which is also connected to the backbone network 2. The other networks 6 comprise the public switched telephone network (PSTN), cellular telephone networks and the like.

The satellite control centre 8 and the tracking, telemetry and control station 9 control the operation of the satellites 3a, 3b, for instance setting transmit power levels and transponder input tuning, as directed by the network management centre 7. Telemetry signals from the satellites 3a, 3b are received by the tracking, telemetry and control station 9 and processed by the satellite control centre 8 to ensure that the satellites 3a, 3b are functioning correctly.

During a telephone call, a mobile station 4a, 4b communicates with a satellite 3a, 3b via a half duplex channel comprising a downlink channel and an uplink channel. The channels comprise TDMA time slots on frequencies allocated on initiation of the call or reallocated during a call.

The satellites 3a, 3b are in non-geostationary orbits and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

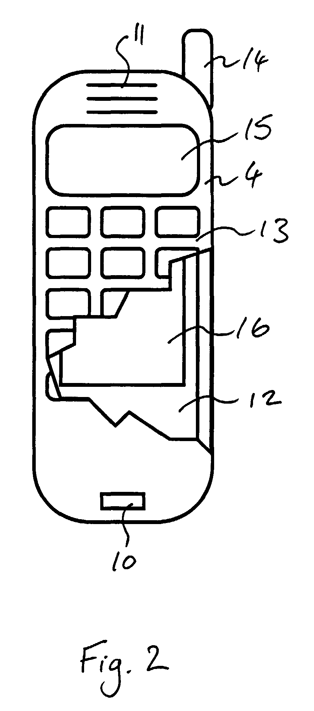

Referring to Figure 2, a mobile station 4 is generally similar to the units presently available for GSM networks and comprises a codec, a controller 16, a microphone 10, a loudspeaker 11, a battery 12, a keypad 13, a radio frequency interface, an antenna 14, a display 15 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

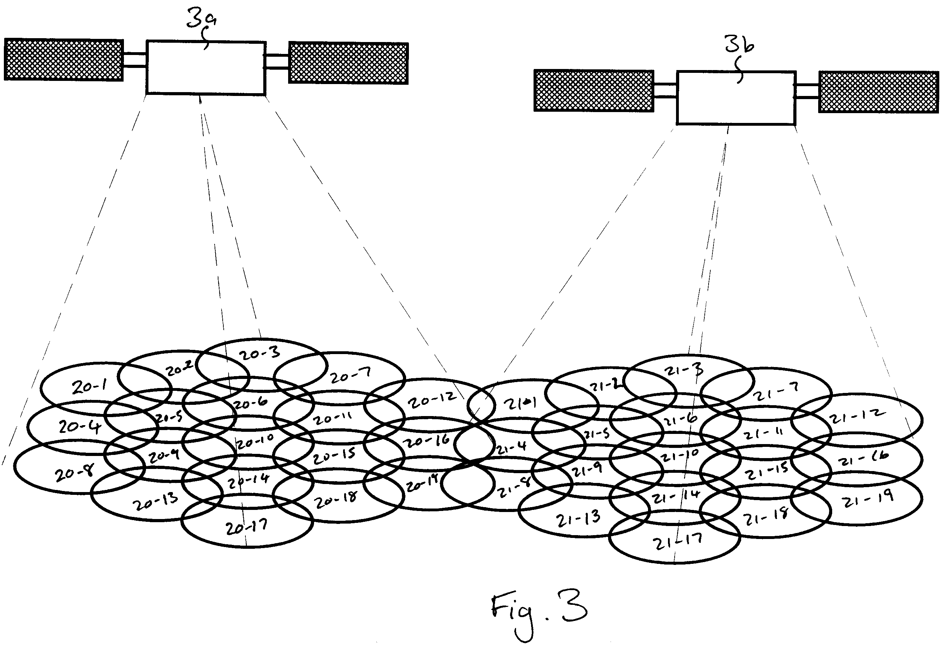

Referring to Figure 3, as mentioned above, each satellite 3a, 3b produces a plurality of beams. Each beam provides one cell of the satellite mobile telephone system. In Figure 3, cells 20-1 to 20-19 are defined by beams from the first satellite 3a and cells 21-1 to 21-19 are defined by beams from the second satellite 3b.

The mobile stations 4a, 4b communicate with satellite access nodes 1a, 1b via the satellites 3a, 3b using a TDMA scheme. Viewed from a satellite 3a, 3b, a traffic channel TDMA frame comprises six time slots and lasts for 40ms. Each time slot lasts 6.67ms. The return path timeslots r0, ..., r6 are shifted relative to the forward path time slots f0, ..., f5. The degree by which they are shifted varies in relation to the distance from the satellite nadir and the cell to which a beam is directed because of the different propagation times.

In a terrestrial cellular mobile telephone network, the signal typically takes a few microseconds to travel from a base transmitter site antenna to a mobile station and any variations are insignificant. Consequently, the TDMA time slot pattern is retained at the mobile station.

In a satellite mobile telephone system with the satellites 3a, 3b in a medium earth orbit, for example at 10 355km, the time taken for signals to travel between a satellite 3a, 3b and a mobile station 4a, 4b is longer than a time slot. In the case, of a satellite orbiting at 10 355km, the one way propagation time to the nadir is 34.54ms which is comparable with the frame duration. This situation is further complicated by there being a significant difference between the path length to the cell at the satellite's nadir and the path lengths to the cells at the edge of the satellite's footprint. This leads to significant differences in the times at which bursts arrive at mobile stations and in the times when mobile stations are required to transmit in order for their signals to fit in with the TDMA frame structure at the satellite.

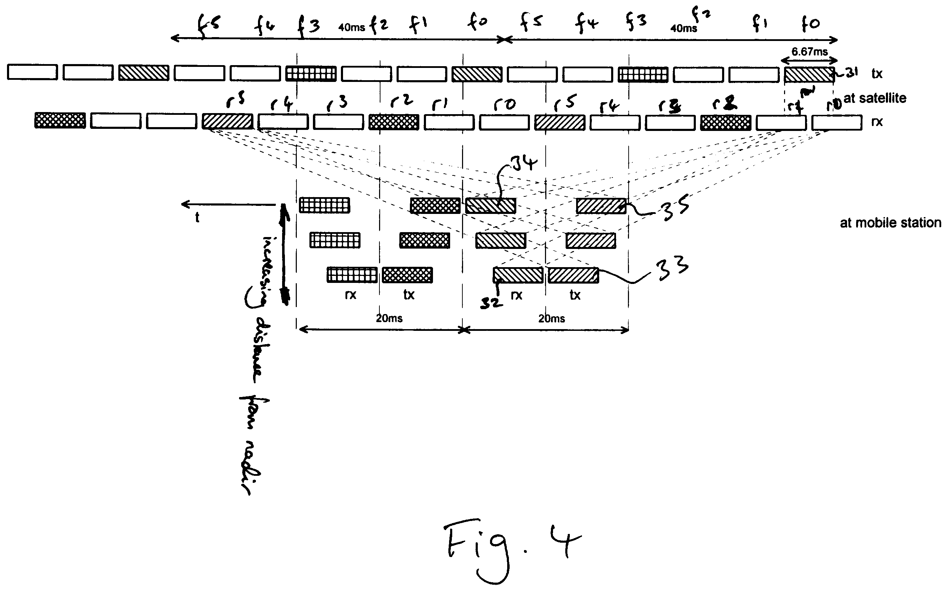

Referring to Figure 4, if a satellite is communicating with a mobile station in the cell at the satellite's nadir, a transmitted burst 31 in time slot f0 is received as a burst 32 by the mobile station some 34.5ms later. While this burst is en route to the mobile station, the mobile station transmits a burst 33 so that it will reach the satellite in time slot r5 of the frame following that in which burst 31 was transmitted. If on the otherhand, a satellite is communicating with a mobile station in a cell at the edge of its footprint, the burst 31 will be received as a burst 34 after a somewhat longer journey than burst 33. In order for the return burst 35 to be received time slot r5 of the frame following that in which burst 31 was transmitted, it must be transmitted by the mobile station correspondingly earlier than burst 33.

For convenience, the paired transmit and receive frames of a traffic channel in the TDMA scheme are separated by a time (4.5 time slots for example) that allows the mobile station to transmit and receive bursts in successive time periods.

It can be seen that the different path lengths mean that a burst from the satellite can arrive at a mobile station at any time within a 10ms window. Similarly, the mobile station must adjust the timing of the bursts that it transmits within a 10ms window. Thus, 20ms must be set aside at the mobile station for each exchange with the satellite.

Under normal conditions, a mobile station only has one exchange with a satellite during each 40ms frame. However, under certain circumstances it is desirable to provide path diversity or double data rate. In this case, the mobile station has two exchanges, with the same or different satellites, during one 40ms frame.

The broadcast control channel is transmitted using a different carrier frequency to the traffic channels. Each broadcast control channel burst comprises 120 symbols (6.67ms) and one burst is transmitted in every 25 timeslots. Consequently, the broadcast control channel bursts cycles through timeslots corresponding to traffic channel timeslots 0 to 5 in 1 second.

Each burst comprises 120 symbols and each frame is 720 symbols long. At a mobile station operating in diversity mode, gaps of upto 120 symbols duration occur between bursts. The worst case occurs when the bursts are evenly spaced at the mobile station, in which case a gap of 60 symbols duration occurs between bursts.

When a mobile station is to be handed over between cells, belonging to the same or different satellites, the satellite access node, with which the mobile station is communicating, must obtain from the mobile station reports of signal measurements for the cell in which the mobile station is currently located and neighbouring cells. The reporting of the signals in neighbouring cells falls into two categories:-

(a) those that require the mobile station to perform background received signal strength measurements for the current cell and neighbouring cells, associated with either the serving satellite or a non-serving satellite, rank the measurements and report a subset corresponding to at least the current cell and the highest received signal strength for cells of the serving and non-serving satellites; and
(b) those that require the mobile station to synchronise to the transmissions to a neighbouring cell and then report on it, in which case if a cell is associated with a non-serving satellite, timing and frequency measurements are reported.

A certain amount of time is required to perform these measurements and report them. Consequently, if a mobile station is operating in diversity mode, i.e. two exchanges per frame, if the network cannot provide an estimated time of arrival for a burst of a neighbouring cell, the time allocated to an exchange will need to be stolen when the mobile station is first commanded to perform type (a) monitoring of signals from a non-serving satellite or has previously failed to find a broadcast control channel burst originating from a non-serving satellite, and whenever the mobile station is commanded to perform type (b) monitoring.

Alternatively, the network can include additional functionality for deriving the position of the mobile station 4 and use this together with known orbit data to signal to the mobile station 4 the time of arrival of the BCCH bursts of a neighbouring cell.

**Handover to neighbouring cell of serving satellite**

If the mobile station 4 is not operating in diversity mode, it repeatedly monitors the received signal levels for the neighbouring cells during the 20ms of each frame not occupied by an exchange and possibly in the nominally occupied 20ms by using a reduced burst. For each neighbouring cell, and the current cell, the mobile station estimates the time of arrival of the broadcast control channel bursts. It does this by calculating, for each cell, ATN mod 25 where ATN is the current absolute timeslot number. Since, the broadcast control channel burst cycle through the 6 traffic channel timeslots once every second, the mobile station need not wait longer than 0.5 seconds to receive a broadcast control channel burst for a particular cell.

Phase shift keying is used for the broadcast control channels and for each broadcast received, the mobile station calculates the average burst signal strength using:

$$P_s = \frac{\sum_{t=0}^{T}(I^2 + Q^2)}{T}$$

where $P_s$ is proportional to the average received signal power, $I$ and $Q$ are similarly proportional to the in-phase and quadrature components of the amplitude of the received signal.

The mobile station stores a list comprising the received signal strengths for each of the broadcast control channels that it can monitor.

If the satellite access node 1 at the satellite access node 1a determines that a mobile station 4 may need to be handed over to another cell, it requests from the mobile station 4 a received signal strength level report for the expected new cell (steps sbs1 and ms1). The request is sent using the slow associated control channel. The mobile station responds to the request by including in its report the most recent value for that cell and sending this to the satellite access node 1 of the satellite access node 1.

If the mobile station 4 is operating in diversity mode, the 20ms window is not available for performing broadcast control channel signal strength measurements. In this case, the mobile station 4 must perform the measurements between bursts. As described above, the worst case provides a maximum gap between bursts of 60 symbols. Allowing for the time required to retune the mobile station's local oscillator, a minimum period of 38 symbols duration is available measuring a broadcast control channel signal strength. The reduced measurement time reduces the accuracy of the measurement but not so much as to make the measurement unreliable.

In both of the above cases, the mobile station does not need to synchronise with the broadcast control channel whose signal is being measured.

**Handover to neighbouring cell of non-serving satellite**

In order to be able to predict the arrival times for broadcast control channel of the neighbouring cell, the mobile station 4 is provided with the propagation time for signals from the neighbouring satellite to the cell. The accuracy of this measurement may be limited by system configuration to the cell's z-arc (i.e. distance from nadir) or may include more accurate information.

Using the propagation time and knowledge of the system's time base, the mobile station 4 identifies a 20ms window, not being used currently for exchanges, during which the neighbouring cell's broadcast control channel burst can be detected. This window is opened, and the broadcast control channel burst is detected and its actual timing determined.

Once the actual timing has been established, the signal strength of the broadcast control channel burst is determined during another 20ms window, again using the formula:

$$P_s = \frac{\sum_{t=0}^{T}(I^2 + Q^2)}{T}$$

If the mobile station 4 is operating in double data rate mode, it must steal one of the 20ms periods being used for exchanges so that it can acquire the broadcast control channel burst timing. However, once the timing has been acquired, it does not steal another 20ms period but measures the broadcast control channel burst signal strength between bursts as described above.

When the mobile station 4 is operating in diversity mode, it only transmits one burst per frame but receives two. In this case the measurement is performed in the period of the mobile station transmit burst that corresponds to one of the received bursts but which is not being used by the mobile station.

**Full report requested for neighbouring cell of serving satellite**

The satellite access node 1 transmits to the mobile station 4 a request for a full report on a neighbouring cell. This may be done to confirm that a routinely sent report was not in fact a measurement of an interfering signal. The mobile station 4 responds to this request by breaking from its cyclical measurement of broadcast control channel signal strengths and opens a 20ms window when the broadcast control channel burst in question is due to arrive. During this window, the mobile station 4 measures the signal strength of the broadcast control channel as described above and reports it to the satellite access node 1.

The report has three fields, a signal strength, a burst timing field and a burst carrier frequency field. Since the cell belongs to the serving satellite, the satellite access node 1 does not need the timing and frequency data and these fields are left empty but can be filled to provide proof against interference or spurious signals.

If the mobile station 4 is operating in diversity mode or double data rate mode, it responds to the request by breaking from its cyclic measurement of broadcast control channel signal strengths and measures the signal strength, burst timing and frequency of the broadcast control channel in question. This value is then reported back to the satellite access node 1. In diversity mode, the measurement is carried out in the period of the mobile station's transmit burst that corresponds to the unused mobile station receive burst period.

**Full report requested for neighbouring cell of non-serving satellite**

In this case, the report is again sent in response to a specific request. In response to the request, the mobile station 4 by breaks from its cyclical measurement of broadcast control channel signal strengths.

If the mobile station 4 is not operating in diversity mode, it measures the broadcast control channel burst signal strength as described in the second example. Thereafter, it opens two further 20ms windows during which it performs timing and frequency measurements.

If on the other hand, the mobile station 4 is operating in double data rate, it steals 20ms periods to make respectively signal strength, timing and frequency measurements. In diversity mode, the mobile station uses the unused transmit burst period which partners one of the received diversity bursts.

The report sent back to the satellite access node 1 comprises the signal strength, the difference between the propagation delay from the serving satellite and that from the non-serving satellite and the difference between the doppler shift for signals from the serving satellite and that for signals from the non-serving satellite.

**Claims**

1. A method of reporting received signal characteristics in a mobile telephone network employing TDMA for communication between a base station and a mobile station (4a, 4b), the method comprising making measurements at a mobile station and transmitting a report, generated on the basis of said measurements, to a base station wherein the measurements are performed between transmission and reception of TDMA bursts by the mobile station and the frame structure of the TDMA scheme does not include idle frames.

2. A method according to claim 1, wherein the propagation time between a station, directly in communication with the mobile station, and the mobile station is greater than the duration of a burst.

3. A method according to claim 2, wherein said station comprises a satellite orbiting the earth.

4. A method according to claim 2 or 3, comprising operating said station and the mobile station to exchange two bursts per TDMA frame, wherein said measurements are made by the mobile station instead of transmitting a burst.

5. A method according to claim 2 or 3, wherein the mobile station receives two bursts per frame from one or more stations and transmits a burst during a slot complementing the slot of the better of the two received bursts, said measurements being made during the slot complementing the slot of the worse of the two received bursts.

6. A method according to any preceding claim, wherein the base station transmits a measurement request to the mobile station and the mobile station responds by performing said measurements.

7. A method according to any preceding claim, wherein said measurements include measurements of received signal timing and/or frequency.

8. A mobile station for a mobile telephone network including a control processor, wherein the control processor is programmed to control the mobile station to perform the mobile station's role in a method according to any preceding claim.

Fig. 1

Fig. 2

Fig. 3

EP 0 920 143 A1

EP 0 920 143 A1

f5  f4  f3  40ms f2  f1  f0  f5  f4  f3  40ms f2  f1  f0

6.67ms

31  tx

at satellite

r5  r4  r3  r2  r1  r0  r5  r4  r3  r2  r1  r0

rx

34

35

at mobile station

t

increasing distance from nadir

rx  tx

33

32  rx  tx

20ms  20ms

Fig. 4

European Patent
Office

**EUROPEAN SEARCH REPORT**

Application Number

EP 97 30 9651

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 96 21998 A (NOKIA) 18 July 1996<br>* claims 1-4 *<br>--- | 1 | H04B7/185<br>H04Q7/38<br>H04B7/26 |
| A | WO 94 27385 A (NOKIA) 24 November 1994<br>* page 1, line 3 - page 4, line 30 *<br>--- | 1 | |
| A | WO 94 29981 A (ERICSSON) 22 December 1994<br>* page 6, line 22 - page 7, line 9 *<br>--- | 1 | |
| A | WO 94 13113 A (NOKIA) 9 June 1994<br>* page 3, line 17 - page 5, line 2 *<br>----- | 1 | |

TECHNICAL FIELDS
SEARCHED (Int.Cl.6)

H04B
H04Q

The present search report has been drawn up for all claims

| Place of search | Date of completion of the search | Examiner |
|---|---|---|
| THE HAGUE | 10 June 1998 | Bischof, J-L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)